# EUROPÄISCHE PATENTSCHRIFT

(11) **EP 2 574 901 B1**
(45) Veröffentlichungstag und Bekanntmachung des Hinweises auf die Patenterteilung: **25.02.2015**
(21) Anmeldenummer: 11183599.7
(22) Anmeldetag: 30.09.2011
(51) Int. Cl.: G01N 5/00

(54) **Messgerät zur gravimetrischen Feuchtigkeitsbestimmung**
Measuring device for gravimetric moisture determination
Appareil de mesure destiné à la détermination de l'humidité gravimétrique

(43) Veröffentlichungstag der Anmeldung: 03.04.2013
(73) Patentinhaber: Mettler-Toledo AG, 8606 Greifensee (CH)
(72) Erfinder: Marmier, Yves, 2300 La Chaux-de-Fonds (CH); Albrecht, Beat, 8046 Zürich (CH); Meister, Beat, 8606 Nänikon (CH)

(56) Entgegenhaltungen:
- EP-A1- 1 850 110
- FR-A1- 2 606 510

## Beschreibung

Die vorliegende Erfindung bezieht sich auf ein Messgerät zur gravimetrischen Feuchtigkeitsbestimmung.

Zur Bestimmung des Feuchtigkeitsgehaltes einer Probe wird diese getrocknet und das Gewicht vor und nach dem Trocknungsvorgang manuell bestimmt. Durch die umfangreichen Arbeitsabläufe, die mit dieser Methode verbunden sind, ist diese sehr teuer und anfällig für Fehler.

Gegebenenfalls kann der Gewichtsverlust auch während des Trocknungsvorganges gemessen werden. Dabei nimmt bei einer bekannten Probe in Abhängigkeit der Temperatur, der Trocknungszeit und den Prüfraumbedingungen deren Gewichtswert ab, welcher einer Gewicht- Zeit- Kurve folgt, die sich asymptotisch dem Trockengewicht der Probe annähert. Die Kurve wird für die jeweilige Probe durch Vergleichsversuche ermittelt und kann in einer Näherungsformel mathematisch ausgedrückt werden. Aufgrund der zur Verfügung stehenden elektronischen Mittel kann ein entsprechend ausgerüstetes Messgerät zur gravimetrischen Feuchtigkeitsbestimmung den Feuchtigkeitsgehalt einer Probe anhand der gemessen Kurvenparameter und der Trocknungszeit errechnen und auf einer Anzeigeeinheit anzeigen. Durch diese Methode muss das zu trocknende Gut nicht mehr vollständig durchgetrocknet sein, es genügt die Ermittlung der Koordinaten zweier Erfassungspunkte im Gewicht-Zeitdiagramm.

Wie bereits eingangs erwähnt, verändert sich das Gewicht einer Probe im Wesentlichen in Abhängigkeit von der Temperatur, der Trocknungszeit und den Prüfraumbedingungen. Vor allem die hohen Anforderungen an den Prüfraum beschränken die auf dem Markt erhältlichen Geräte in ihrer Genauigkeit.

Als Prüfraum wird ein durch das Gehäuse des Messgerätes umschlossener, zwecks Einführung beziehungsweise Entfernung einer Probe öffenbarer Raum bezeichnet. Im Inneren des Prüfraums sind zudem eine Probeaufnahme und ein Mittel zur Erwärmung der Probe angeordnet. Die Probeaufnahme ist mit einem gravimetrischen Messgerät verbunden. Das gravimetrische Messgerät kann auch als Wägevorrichtung bezeichnet werden.

Üblicherweise wird eine dünne Schicht der Probe auf eine ebene Probeaufnahme, beispielsweise eine Probeschale aufgebracht. Die Schale wird im Messgerät zur gravimetrischen Feuchtigkeitsbestimmung in ihrer flächigen Ausdehnung vorzugsweise horizontal und parallel zur flächigen Ausdehnung des Mittels zur Erwärmung der Probe angeordnet, um eine gleichmässige Erwärmung der Probe zu ermöglichen.

Als Mittel zur Erwärmung der Probe werden verschiedene Strahlungsquellen wie Heizstrahler, Mikrowellengeneratoren, Halogen- und Quarzlampen verwendet. Durch Versuche konnte festgestellt werden, dass eine der Hauptursachen einer ungenauen Messwerterfassung bei bestehenden Messgeräten zur gravimetrischen Feuchtigkeitsbestimmung die Art der verwendeten Strahlungsquellen und deren Anordnung im Prüfraum ist.

Ein Messgerät zur gravimetrischen Feuchtigkeitsbestimmung der genannten Gattung ist aus der europäischen Patentschrift EP 0611 956 B1 bekannt. Bei diesem Gerät erfolgt die Beschickung der Waagschale ausserhalb des Messgerätes zur gravimetrischen Feuchtigkeitsbestimmung. Dazu wird die Waage auf einem schubladenförmigen Auszug aus dem Messgerätgehäuse herausgefahren. Als Strahlungsquelle wird eine ringförmige Halogenlampe eingesetzt, welche im Betriebszustand oberhalb der Probeaufnahme angeordnet ist. Aus EP 1850 110 A1 sind weitere Ausführungsformen bekannt. Es wird beispielsweise ein Messgerät offenbart das zur Beschickung geöffnet wird, indem ein Teil des Gehäuses in horizontaler Richtung verschwenkt wird. In einer weiteren Ausführungsform wird ein Teil des Gehäuses in vertikaler Richtung verschwenkt. Auch die in US 7851 712 B2 offenbarten Messgeräte werden durch Verschwenkung in vertikaler Richtung eines Gehäuseteils zur Beschickung geöffnet.

Alle diese Ausführungsformen haben den Nachteil, dass beim Beschicken die Strahlungsquelle, auch nachfolgend Mittel zur Erwärmung der Probe genannt, heiss sein kann und somit für den Benutzer eine Verletzungsgefahr darstellt. Ausserdem kann der Servicetechniker bei der Wartung der Gefahr eines Stromschlages ausgesetzt sein.

Aufgabe ist es daher, ein Messgerät zur gravimetrischen Feuchtigkeitsbestimmung zur Verfügung zu stellen, welches eine sichere Handhabung gewährleistet.

Diese Aufgabe wird durch das erfindungsgemässe Messgerät zur gravimetrischen Feuchtigkeitsbestimmung gemäss Anspruch 1 und dessen abhängigen Ansprüche gelöst.

Das erfindungsgemässe Messgerät zur gravimetrischen Feuchtigkeitsbestimmung nach Anspruch 1 weist ein Gehäuse und eine im Gehäuse angeordneten Wägevorrichtung auf. Die Wägevorrichtung weist eine Lastaufnahme auf, auf die eine Probe auflegbar ist. Das Gehäuse weist einen feststehenden Gehäuseteil und einen beweglichen Gehäuseteil auf, wobei der bewegliche Gehäuseteil eine Messposition und eine Beschickungsposition einnehmen kann. In der Beschickungsposition sind der feststehende Gehäuseteil und der bewegliche Gehäuseteil derart voneinander beabstandet, dass eine Probe auf die Lastaufnahme aufbringbar ist. Die Probe wird dabei normalerweise manuell auf die Lastaufnahme aufgebracht. In Messposition bilden der feststehende Gehäuseteil und der bewegliche Gehäuseteil einen im Wesentlichen abgeschlossenen Prüfraum um die Lastaufnahme. Zur Erwärmung einer auf der Lastaufnahme angeordneten Probe ist im Prüfraum ein Mittel zur Erwärmung der Probe angeordnet. Das Mittel zur Erwärmung der Probe wandelt elektrische Energie in Wärme um. Erfindungsgemäss weist das Messgerät ein elektrisches Kontaktmittel mit einem ersten Teil und einem zweiten Teil auf. Der erste Teil des elektrischen Kontaktmittels ist mit dem feststehenden Gehäuseteil und der zweite Teil des elektrischen Kontaktmittels mit dem beweglichen Gehäuseteil verbunden. Dabei besteht in Messposition über den ersten und zweiten Teil des elektrischen Kontaktmittels eine elektrische Verbindung und in Beschickungsposition ist die elektrische Verbindung zwischen dem ersten und dem zweiten Teil des elektrischen Kontaktmittels unterbrochen.

In diesem Zusammenhang wird unter Gehäuseteil das Gehäuse mit den darin beziehungsweise daran angeordneten Geräteelementen verstanden. Typischerweise ist am beweglichen Gehäuseteil das Mittel zur Erwärmung der Probe und im feststehenden Gehäuseteil die Wägevorrichtung, die Probenaufnahme und das Elektronikmodul angeordnet.

Nach der Erfindung ist nur der feststehende Gehäuseteil am Stromnetz angeschlossen und der bewegliche Gehäuseteil ist ausschliesslich über das elektrische Kontaktmittel mit Elektrizität versorgbar. Durch diese Anordnung wird sichergestellt, dass nur in Messposition der bewegliche Gehäuseteil mit Elektrizität versorgt wird. In Beschickungsposition liegt kein Strom am beweglichen Gehäuseteil an. Dadurch dass das Mittel zur Erwärmung der Probe während der Beschickung und Wartung nicht mit Strom versorgt wird, kann das Mittel zur Erwärmung der Probe während der Beschickung nicht aufgeheizt werden und die Verbrennungsgefahr für den Benutzer ist reduziert.

Bevorzugterweise ist das erste Teil des elektrischen Kontaktmittels im Wesentlichen starr mit dem feststehenden Gehäuseteil und der zweite Teil des elektrischen Kontaktmittels im Wesentlichen starr mit dem beweglichen Gehäuseteil verbunden. Als elektrische Kontaktmittel kommen beispielsweise geeignete Stecker-Buchsenverbindungen in Frage.

In einer bevorzugten Ausführungsform ist zwischen dem beweglichen Gehäuseteil und dem feststehenden Gehäuseteil kein zusätzliches elektronisches Kontaktmittel angeordnet, mittels dessen beispielsweise Steuersignale zwischen feststehenden Gehäuseteil in den beweglichen Gehäuseteil transportierbar sind. Im beweglichen Gehäuseteil sind keine Bauteile angeordnet, die Steuersignale benötigen bzw. liefern. Das Mittel zur Erwärmung der Probe wird ausschliesslich über die Stromversorgung, die über das erste und zweite Kontaktmittel erfolgt gesteuert. Die Temperatur des Mittels zur Erwärmung der Probe wird ausschliesslich über die Stromversorgung gesteuert.

In einer bevorzugten Ausführungsform ist mittels eines Verschiebungsmittels der bewegliche Gehäuseteil von der Messposition in die Beschickungsposition durch eine Translation und mittels des Verschiebungsmittels des beweglichen Gehäuseteils verschiebbar. Durch diese Verschiebung wird der elektrische Kontakt zwischen dem ersten und zweiten Teil des elektrischen Kontaktmittels unterbrochen. Falls zusätzliche elektronische Kontaktmittel vorhanden wären, würde die Verbindung über das elektronische Kontaktmittel ebenfalls unterbrochen.

Vorteilhafterweise ist das elektrische Kontaktmittel eine Steckverbindung bzw. eine Stecker- Buchsenverbindung. Dabei sollte die Steckrichtung der Steckerverbindung im Wesentlichen in vertikaler Richtung verlaufen. Besonders vorteilhaft hat sich eine drehbare, konzentrische Steckverbindung, wie sie auch bei Wasserkochern verwendet wird, als elektrisches Kontaktmittel erwiesen. Die drehbare, konzentrische Steckverbindung ist besonders robust und stellt zuverlässig einen elektrischen Kontakt her.

Bevorzugterweise ist der bewegliche Gehäuseteil in horizontaler und vertikaler Richtung verschiebbar. Besonders vorteilhaft ist es falls die Verschiebung in horizontaler und vertikaler Richtung gleichzeitig erfolgt. Die Verschiebung beziehungsweise die Translation des beweglichen Gehäuseteils kann mittels einer Parallelverschiebung erfolgen. Die Verschiebung bewegt den beweglichen Gehäuseteil gleichzeitig nach oben und nach hinten, das heisst vom Benutzer weg. Wird das bewegliche Gehäuseteil von der Beschickungsposition in die Messposition bewegt, wird durch diese Bewegung das elektrische Kontaktmittel geschlossen.

In einer bevorzugten Ausführungsform ist sowohl in Messposition als auch in Beschickungsposition der bewegliche Gehäuseteil oberhalb des feststehenden Gehäuseteils angeordnet. Dies kann dadurch realisiert werden, indem der bewegliche Gehäuseteil in horizontaler Richtung wesentlich kürzer ausgestaltet ist als der feststehende Gehäuseteil. Idealerweise beträgt die Länge des beweglichen Gehäuseteils weniger als die Hälfte der Länge des feststehenden Gehäuseteils. Das Verschiebemittel ist derart ausgestaltet, dass bei Verschiebung des beweglichen Gehäuseteils der bewegliche Gehäuseteil immer oberhalb des feststehenden Gehäuseteils angeordnet ist.

Idealerweise ist das Mittel zur Erwärmung im beweglichen Gehäuseteil derart angeordnet, dass in Messposition das Mittel zur Erwärmung der Probe oberhalb der Probenaufnahme und in Beschickungsposition über dem beweglichen Gehäuseteil angeordnet ist. Dies bietet den Vorteil, dass die Probe von oben beheizt werden kann. Da das Mittel zur Erwärmung oben angeordnet ist, ist es weniger anfällig für Verschmutzungen.

Das Mittel zur Erwärmung ist zusammen mit dem beweglichen Gehäuseteil von der Messposition in die Beschickungsposition verschwenkbar. Der wesentliche Vorteil liegt in der Verminderung der Verletzungsgefahr, da das Mittel zur Erwärmung weder in Messposition noch in Beschickungsposition unabsichtlich vom Benutzer berührt werden kann.

Idealerweiser ist das Mittel zur Erwärmung in Messposition und/oder Beschickungsposition in einer flächigen Ausdehnung im Wesentlichen horizontal über der Probenaufnahme und zwischen dem feststehenden Gehäuseteil und dem beweglichen Gehäuseteil angeordnet.

Für Wartungszwecke ist mindestens ein Teil des beweglichen Gehäuseteils um eine im Wesentlichen horizontal ausgerichtete Schwenkachse von der

Beschickungsposition in eine Wartungsposition schwenkbar. Dabei ist an dem schwenkbaren Teil des beweglichen Gehäuseteils das Mittel zur Erwärmung angeordnet und dieses Mittel zur Erwärmung ist in der Wartungsposition zu Wartungszwecken für den Servicetechniker zugänglich. Auch in der Wartungsposition liegt kein Strom am beweglichen Gehäuseteil an. Dadurch ist der Benutzer bzw. Servicetechniker nicht der Gefahr ausgesetzt einen Stromschlag zu bekommen.

Erfindungsgemäss ist das Mittel zur Erwärmung im beweglichen Gehäuseteil angeordnet und ist in Wartungsposition werkzeuglos entfernbar. Vorteilhafterweise weist der bewegliche Gehäuseteil in Wartungsposition eine Wartungsöffnung auf durch die das Mittel zur Erwärmung der Probe entfernbar ist. Dabei ist das Mittel zur Erwärmung in der Wartungsposition im Wesentlichen vertikal ausgerichtet. Dadurch ist das Mittel zur Erwärmung dem Benutzer zugewandt und leichter zugänglich.

Einzelheiten des erfindungsgemässen Messgeräts ergeben sich anhand der Beschreibung des in den Zeichnungen dargestellten Ausführungsbeispiels. Es zeigen:
- Fig. 1: einen Schnitt durch eine schematische Darstellung eines erfindungsgemässes Messgeräts in Messposition;
- Fig. 2: einen Schnitt durch eine schematische Darstellung des Messgeräts aus Figur 1 in Beschickungsposition;
- Fig. 3a: eine schematische Darstellung eines weiteren erfindungsgemässen Messgeräts mit einem Temperatursensor, der sich in Messposition befindet;
- Fig. 3b: eine schematische Darstellung des in Fig. 3a dargestellten Messgeräts wobei sich der Temperatursensor in Beschickungsposition befindet;
- Fig. 4: eine isometrische Darstellung des erfindungsgemässen Messgeräts in Messposition;
- Fig. 5: das Messgerät aus Figur 4 in Beschickungsposition;
- Fig. 6: das Messgerät aus Figur 4 in Wartungsposition;
- Fig. 7: das Messgerät aus Figur 6 in Wartungsposition mit teilweise entferntem Schutzglas und Windschutz und
- Fig. 8: der bewegliche Gehäuseteil des Messgeräts aus Figur 7 in Wartungsposition ohne Schutzglas.

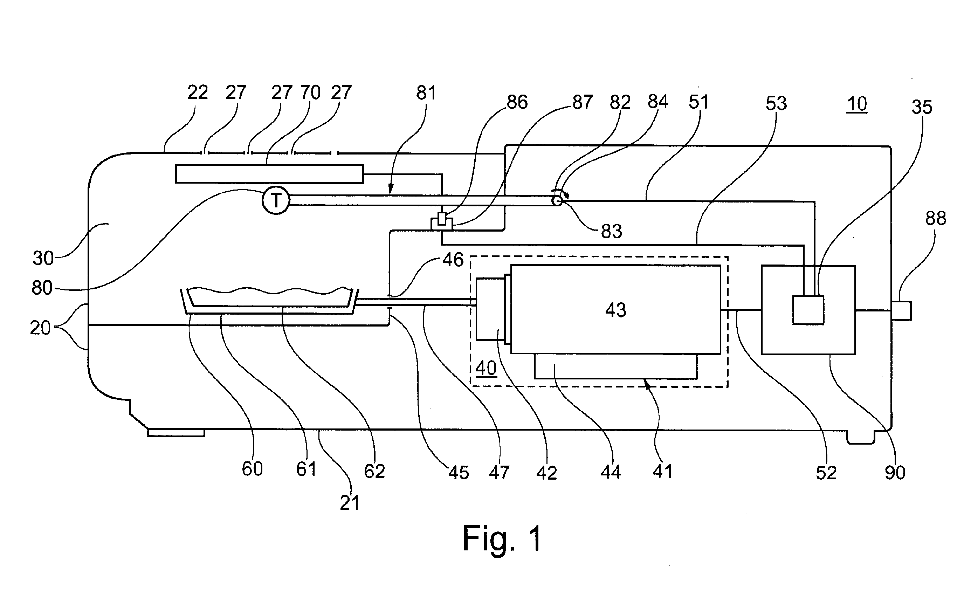

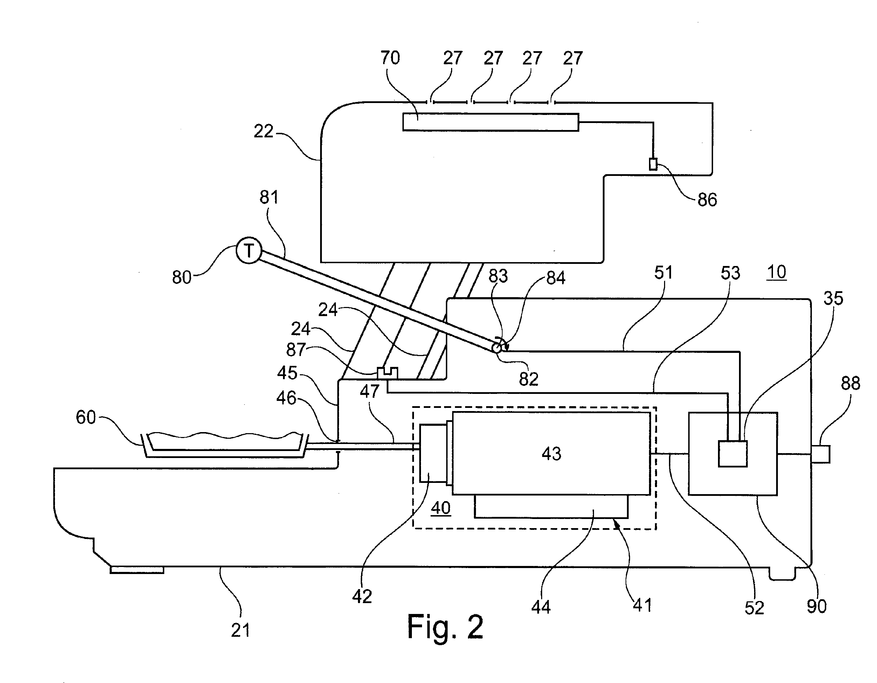

In Figur 1 und Figur 2 ist eine schematische Darstellung eines erfindungsgemässen Messgeräts 10 im Schnitt dargestellt. In Figur 1 befindet sich das Messgerät 10 in Messposition und in Figur 2 in Beschickungsposition. Das Messgerät 10 weist ein Gehäuse 20 auf, in welchem ein Prüfraum 30 angeordnet ist. Das Gehäuse 20 ist in einen beweglichen Gehäuseteil 22 und in einen feststehenden Gehäuseteil 21 unterteilt. Bei Benutzung steht der feststehende Gehäuseteil 21 auf einer festen Unterlage. Der bewegliche Gehäuseteil 22 ist am feststehenden Gehäuseteil befestigt. Hinten, das heisst an der vom Benutzer abgewandten Seite des Prüfraumes 30 ist eine Wägevorrichtung 40 im feststehenden Gehäuseteil 21 angeordnet. Der bewegliche Gehäuseteil 22 ist mittels einer Translationsführung 24 am feststehenden Gehäuseteil 21 geführt. Die Translationsführung 24 ist derart ausgestaltet, dass bei der Bewegung des beweglichen Gehäuseteils 22 von der Messposition in die Beschickungsposition die Ausrichtung des beweglichen Gehäuseteils 22 im Wesentlichen konstant bleibt. D.h. der bewegliche Gehäuseteil 22 wird im Wesentlichen parallel zum feststehenden Gehäuseteil 21 verschoben. Im als Hohlkörper ausgestalteten feststehenden Gehäuseteil 21 sind eine Wägezelle 43 und mindestens ein Elektronikmodul 90 angeordnet, welche durch Übertragungsmittel 52 miteinander verbunden sind. Das Elektronikmodul 90 enthält mindestens ein nicht näher dargestelltes Signalverarbeitungsmodul, gegebenenfalls auch ein Steuerungs-und/oder Regelungsmodul. Die Wägezelle 43 weist mindestens einen feststehenden Bereich 41 und einen Lastaufnahmebereich 42 auf. Bekannte Wägezellentypen sind beispielsweise mit Dehnungsmessstreifen bestückte elastische Verformungskörper, Wägezellen die nach dem Prinzip der elektromagnetischen Kraftkompensation arbeiten, Wägezellen mit Schwingsaiten, kapazitive Wägesensoren und dergleichen. Der feststehende Bereich 41 ist mit dem feststehenden Gehäuseteil 21 fest verbunden und am Lastaufnahmebereich 42 ist ein Verbindungsglied 47 angeordnet, welches eine Probeaufnahme 60 mit dem Lastaufnahmebereich 42 der Wägezelle 43 verbindet. Auf die Probeaufnahme 60 kann wie dargestellt eine Probeschale 61 mit einer Probe 62 aufgelegt werden. Sofern es die Ausgestaltung der Probeaufnahme 60 erlaubt, kann selbstverständlich die Probe 62 auch direkt auf die Probeaufnahme 60 aufgebracht werden.

Wie in Figur 1 dargestellt, befindet sich das Messgerät 10 in Messstellung; das heisst, dass sich die Probeaufnahme 60 mit der aufgelegten Probeschale 61 im Prüfraum 30 befindet. Der feststehende Gehäuseteil 21 und der bewegliche Gehäuseteil 22 bilden einen im Wesentlichen abgeschlossenen Prüfraum 30 um die Probenaufnahme 60. Eine Mittel zur Erwärmung 70 ist im Wesentlichen parallel zur flächigen Ausdehnung der Probeaufnahme 60 angeordnet, um eine möglichst homogene Wärmeverteilung zumindest an der Oberfläche der Probe 62 zu erreichen. Es ist auch möglich unterhalb der Probeaufnahme 60 im Prüfraum 30 ein zusätzliches Mittel zur Erwärmung anzuordnen, wobei deren Strahlung von unten auf die Probe 62 einwirkt. Eine in ihrer flächigen Ausdehnung parallele Anordnung des Mittels zur Erwärmung 70 der Probeaufnahme 60 ist aber nicht zwingend erforderlich. Je nach Probe 62 und durchzuführender Messung kann auch ein schräg zur Probeaufnahme 60 angeordnetes Mittel zur Erwärmung 70 von Vorteil sein.

Damit die von der Probe 62 abgegebene Feuchtigkeit aus dem Prüfraum 30 entweichen kann, sind im Gehäuse 20 an geeigneter Stelle, vorzugsweise oberhalb des Mittels zur Erwärmung 70 im beweglichen Gehäuseteil 22, Abzugsöffnungen 27 angeordnet. Um eine ausreichende Luftzirkulation innerhalb des Prüfraumes 30 zu erzeugen, sind ferner an geeigneter Stelle Belüftungsöffnungen vorzusehen.

In Figur 1 befindet sich das Messgerät 10 in Messposition. Der feststehende Gehäuseteil 21 und der bewegliche Gehäuseteil 22 bilden einen im Wesentlichen abgeschlossenen Prüfraum 30. Dabei wird der Prüfraum 30 nach oben im Wesentlichen vom beweglichen Gehäuseteil 22 und nach unten im Wesentlichen vom feststehenden Gehäuseteil 21 begrenzt. Das Mittel zur Erwärmung 70 ist im beweglichen Gehäuseteil 22 angeordnet. Idealerweise ist das Mittel zur Erwärmung 70 über Steckverbindungen lösbar mechanisch mit dem beweglichen Gehäuseteil 22 verbunden. Dadurch kann das Mittel zur Erwärmung 70 zur Reinigung oder Reparatur ohne grossen Aufwand ausgebaut werden. Ferner können durch die Verwendung von Steckverbindungen der Anwender das Messgerät 10 verschiedene, in ihrer Funktionsweise unterschiedliche Mittel zur Erwärmung verwenden. Dadurch ist der Anwender in der Lage, auf die Probe 62 abgestimmte Prüfraumbedingungen zu schaffen.

Das Messgerät 10 weist ein Elektronikmodul 90 auf, das im feststehenden Gehäuseteil 21 angeordnet ist. Das Elektronikmodul 90 weist verschiedene Steuer-/Regelvorrichtungen auf. Unter anderem weist sie auch eine Steuer-/Regelvorrichtung 35 zur Steuerung und Regelung des Mittels zur Erwärmung 70 auf. Ein schematisch dargestellter Temperatursensor 80 erfasst die Temperatur der Probe 62 und liefert die zur Regelung des Mittels zur Erwärmung 70 notwendigen Informationen an die Steuer-/Regelvorrichtung 35. Die Steuer-/Regelvorrichtung 35 ist zudem mit der Wägevorrichtung 40 beziehungsweise mit dem Elektronikmodul 90 mittels mindestens eines Übertragungsmittels 52 verbunden. Das Übertragungsmittel 52 dient der Übermittlung von elektrischen und/oder elektronischen Signalen. Dadurch kann mittels des Elektronikmoduls 90 die Steuer-/Regelvorrichtungen 35 angesteuert werden. Das Messgerät 10 wird mittels eines Stromanschlusses 88 mit Strom versorgt. Der Stromanschluss 88 ist am feststehenden Gehäuseteil 21 angeordnet. Die Stromzufuhr erfolgt bevorzugterweise ausschliesslich über das feststehende Gehäuseteil 21. Der Benutzer bzw. Servicetechniker ist somit nicht der Gefahr ausgesetzt während der Wartung einen Stromschlag zu bekommen.

Die Steuer-/Regelvorrichtung 35 und der Temperatursensor 80 sind mittels eines Übertragungsmittels 51 miteinander verbunden. Ausserdem sind die Steuer-/Regelvorrichtung 35 und das Mittel zur Erwärmung der Probe 70 mittels eines weiteren Übertragungsmittels 53 miteinander verbunden. Die Übertragungsmittel 51, 53 dienen der Übermittelung von elektrischen und elektronischen Signalen zwischen den jeweiligen Bauteilen. Während des Messvorgangs wird mittels des Temperatursensors 80 die Temperatur im Prüfraum 30 bestimmt. Das mittels des Temperatursensors 80 erzeugte Temperatursignal wird mittels des Übertragungsmittels 51 an die Steuer-/Regelvorrichtung 35 übermittelt. Das Temperatursignal ist ein Eingangssignal der Steuer-/Regelvorrichtung 35 mittels dessen das Mittel zur Erwärmung der Probe 70 gesteuert wird.

Der Temperatursensor 80 ist in Messposition zwischen der Probenaufnahme 60 und dem Mittel zur Erwärmung der Probe 70 angeordnet. Durch diese Anordnung kann der für die Messung relevante Temperaturwert gemessen werden. Es besteht auch die Möglichkeit den Temperatursensor an einer anderen Stelle zu positionieren. Die dadurch erhaltenen Werte können jedoch die Erwärmung im Prüfraum weniger genau erfassen. Der Temperatursensor 80 ist auf einer Lanze 81 angeordnet, die am feststehenden Gehäuseteil 21 befestigt ist. Die Lanze 81 ist im Wesentlichen starr und weist ein erstes und ein zweites Ende auf. Am ersten Ende ist der Temperatursensor 80 angeordnet, das zweite Ende ist mit dem feststehenden Gehäuseteil 21 verbunden. Dadurch dass das zweite Ende mit dem feststehenden Gehäuseteil 21 verbunden ist, ist für den Betrieb des Temperatursensors 80 keine elektrische und/oder elektronische Verbindung vom feststehenden Gehäuseteil 21 zum beweglichen Gehäuseteil 22 erforderlich.

Das Übertragungsmittel 51 ist an oder in der Lanze 81 angeordnet. Über ein Drehlager 82 kann die Lanze 81 verdreht werden. Das Drehlager 82 ist am zweiten Ende der Lanze 81 angeordnet. Das Drehlager 82 weist eine Drehachse 83 auf, wobei die Achse des Drehlagers 83 im Wesentlichen horizontal ausgerichtet ist.

Die Lanze 81 und das Drehlager 83 sind derart angeordnet dass der Temperatursensor 80 beim Wechsel von der Messposition in die Beschickungsposition auf einer kreisförmigen Bahn in einer vertikalen Ebene geführt wird. Es ist auch möglich die kreisförmige Bahn in einer anderen Ebene anzuordnen. So ist es beispielsweise möglich die Achse des Drehlagers im Wesentlichen vertikal auszurichten, wodurch der Temperatursensor 80 beim Wechsel von Messposition in Beschickungsposition in einer kreisförmigen Bahn in einer horizontalen Ebene geführt wird.

Die Lanze 81 ist in Messposition mittels der Federkraft eines Federelements 84 vorgespannt. Wird der bewegliche Gehäuseteil 22 von der Messposition in die Beschickungsposition gebracht, so wird die Lanze 81 mittels der Federkraft des vorgespannten Federelements 84 von der Probenaufnahme 60 wegbewegt. Der Temperatursensor 80 und die Lanze 81 behindern in Beschickungsposition nicht den Zugriff auf die Probenaufnahme 60 und die Beschickung des Messgeräts vereinfacht sich. Das Federelement 84 weist idealerweise eine drehmomentbelastete Feder auf, wobei die Achse des Drehmoment mit der Achse des Drehlagers 83 übereinstimmt. Es sind natürlich auch andere Federelemente, wie beispielsweise druckbelastete Federelemente einsetzbar. Dabei muss das Federelement derart angeordnet sein, dass es in Messposition gespannt ist und in Beschickungsposition entspannt bzw. weniger gespannt ist.

Da das Mittel zur Erwärmung der Probe 70 im beweglichen Gehäuseteil 22 und die Steuer- und Regelvorrichtung 35 im feststehenden Gehäuseteil 21 angeordnet ist, muss das Übertragungsmittel 53 elektrische und/oder elektronische Signale vom feststehenden Gehäuseteil 22 in den beweglichen Gehäuseteil 21 übertragen. Dies könnte beispielsweise durch ein flexibles Kabel erfolgen. Durch die Bewegung des beweglichen Gehäuseteils 21 wäre dieses Kabel Biegebelastungen ausgesetzt und wäre daher verschleissanfällig.

Durch ein elektrisches Kontaktmittel mit einem ersten Teil 86 und einem zweiten Teil 87, wobei der erste Teil 86 mit dem beweglichen Gehäuseteil 22 und der zweite Teil mit dem feststehenden Gehäuseteil 21 fest verbunden ist, kann dieses Problem umgangen werden. Dazu ist der erste und der zweite Teil des elektrischen Kontaktmittels 86, 87 derart angeordnet, dass in Messposition über den ersten und zweiten Teil 86, 87 eine elektrische Verbindung besteht und in Beschickungsposition die elektrische Verbindung unterbrochen ist. Ein wesentlicher Vorteil dieser Anordnung besteht darin, dass das Mittel zur Erwärmung der Probe 70 in Beschickungsposition nicht mit Elektrizität versorgt wird. Idealerweise ist die Elektronik zur Steuerung ausschliesslich im feststehenden Gehäuseteil 22 angeordnet. Die Steuerung des Mittels zur Erwärmung der Probe 70 erfolgt ausschliesslich über das erste und zweite elektrische Kontaktmittel 86, 87. Es ist somit kein Anschluss zum Transport von Steuersignalen in den beweglichen Gehäuseteil 21 notwendig. Dies ist ein weiterer Grund für die Anordnung des Temperatursensors 80 am feststehenden Gehäuseteil 21. Wäre der Temperatursensor 80 am beweglichen Gehäuseteil 22 angeordnet, wäre ein Transfer von Signalen vom feststehenden Gehäuseteil 21 in den beweglichen Gehäuseteil 22 notwendig. Ein weiterer Vorteil des erfindungsgemässen Messgeräts 10 besteht darin, dass auch in Beschickungsposition die Temperatur mittels des Temperatursensors 80 gemessen und erfasst werden kann. Auf diese Weise kann beispielsweise die Umgebungstemperatur während des Beschickens gemessen werden.

Das elektrische Kontaktmittel 86, 87 weist eine Steckverbindung auf. Dabei ist einer der beiden Teile des elektrischen Kontaktmittels 86, 87 als Stecker ausgebildet und der andere Teil als eine mit dem Stecker zusammenwirkende Buchse ausgebildet. Die Steckrichtung der Steckerverbindung verläuft im Wesentlichen in vertikaler Richtung.

In Figur 2 ist das Messgerät 10 aus Figur 1 in Beschickungsposition dargestellt. Mittels einer Translationsführung 24 kann der bewegliche Gehäuseteil 22 vom feststehenden Gehäuseteil 21 wegbewegt werden, wodurch das Messgerät 10 von der Messposition in die Beschickungsposition übergeführt wird. Bei der dabei ausgeführten Bewegung erfährt der bewegliche Gehäuseteil 22 eine im Wesentlichen rein translatorische Bewegung. In Beschickungsposition ist der bewegliche Gehäuseteil 22 oberhalb des feststehenden Gehäuseteils 21 und oberhalb der Wägevorrichtung 40 angeordnet. Das Mittel zur Erwärmung der Probe 70 ist in dieser Position zwischen dem beweglichen Gehäuseteil 22 und dem feststehenden Gehäuseteil 21 angeordnet. Dadurch wird ein unbeabsichtigtes Berühren des unter Umständen heissen Mittels zur Erwärmung der Probe 70 verhindert.

Der Temperatursensor 80 wird bei Einnahme der Beschickungsposition nach oben und seitlich von der Probenaufnahme 60 wegbewegt. Der Temperatursensor 80 behindert somit das Beschicken der Probenaufnahme 60 nicht.

Das elektrische Kontaktmittel 86, 87 ist in der Beschickungsposition unterbrochen. Es fliesst keine Elektrizität vom feststehenden Gehäuseteil 21 in der bewegliche Gehäuseteil 22. Da der bewegliche Gehäuseteil 22 über keinen Stromanschluss verfügt, liegt in Beschickungsposition kein Strom am beweglichen Gehäuseteil 22 an.

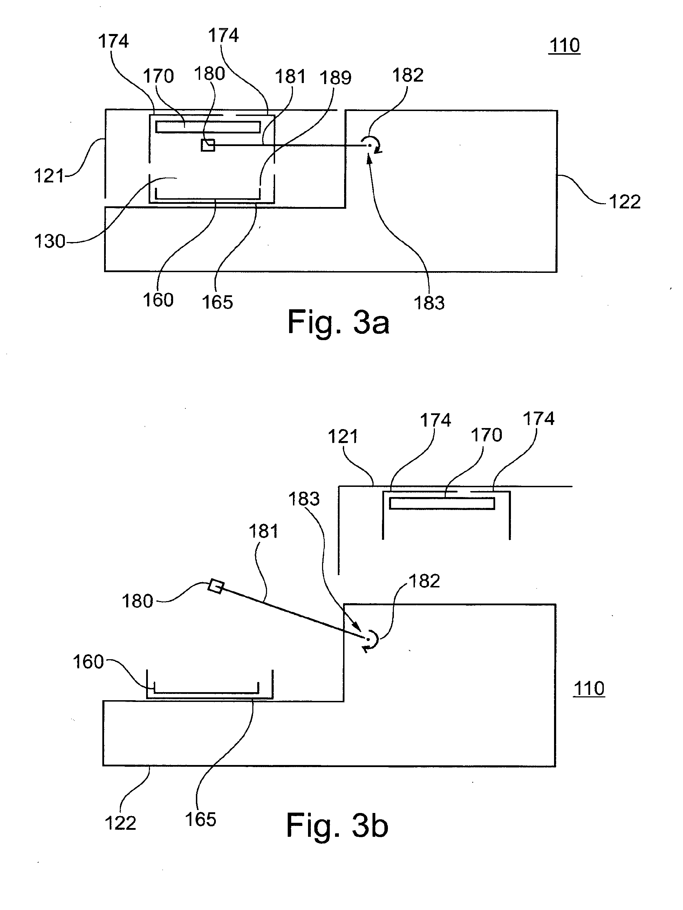

In den Figuren 3a und 3b ist ein weiteres erfindungsgemässes Messgerät 110 stark schematisiert dargestellt. Figur 3a zeigt die Messvorrichtung 110 in Messposition und Fig. 3b zeigt das in Fig. 3a dargestellte Messgerät 110 in Beschickungsposition.

Das Messgerät 110 weist ein Gehäuse 120 mit einem feststehenden Gehäuseteil 121 und einem beweglichen Gehäuseteil 122 auf.

In Messposition wird vom feststehenden Gehäuseteil 121 und vom beweglichen Gehäuseteil 122 ein im Wesentlichen abgeschlossener Prüfraum 130 gebildet. In diesem Prüfraum 130 ist die Probenaufnahme 160 angeordnet. Oberhalb der Probenaufnahme 160 ist ein Mittel zur Erwärmung der Probe 170 angeordnet. Das Mittel zur Erwärmung der Probe 170 ist fest mit dem beweglichen Gehäuseteil 122 verbunden. Ein Temperatursensor 180 ist auf einer Lanze 181 angeordnet. Die Lanze 181 weist ein erstes und ein zweites Ende auf, wobei am ersten Ende der Temperatursensor 180 befestigt ist und das zweite Ende beweglich mit dem feststehenden Gehäuseteil 121 verbunden ist. In Messposition ist der Temperatursensor 180 oberhalb der Lastaufnahme 160 und unterhalb des Mittels zur Erwärmung der Probe 170 angeordnet. In Beschickungsposition ist der Temperatursensor 180 im Wesentlichen seitlich der Laustaufnahme 160 angeordnet. Dies wird dadurch erreicht indem die Lanze 181 starr ist und mittels eines Drehlagers 182 am feststehenden Gehäuseteil 121 befestigt ist. Idealerweise ist die Achse 183 des Drehlagers 182 in horizontaler Richtung ausgerichtet. Die Lanze 181 kann in Messposition mittels der Federkraft eines Federelements vorgespannt sein. Wird das bewegliche Gehäuseteil 122 von der Messposition in Beschickungsposition gebracht, wird die Lanze 181 mittels der Federkraft des Federelements auf einer Kreisbahn nach oben und seitlich bewegt. Bevorzugterweise ist das Federelement in Messposition durch das bewegliche Gehäuseteil 122 vorgespannt.

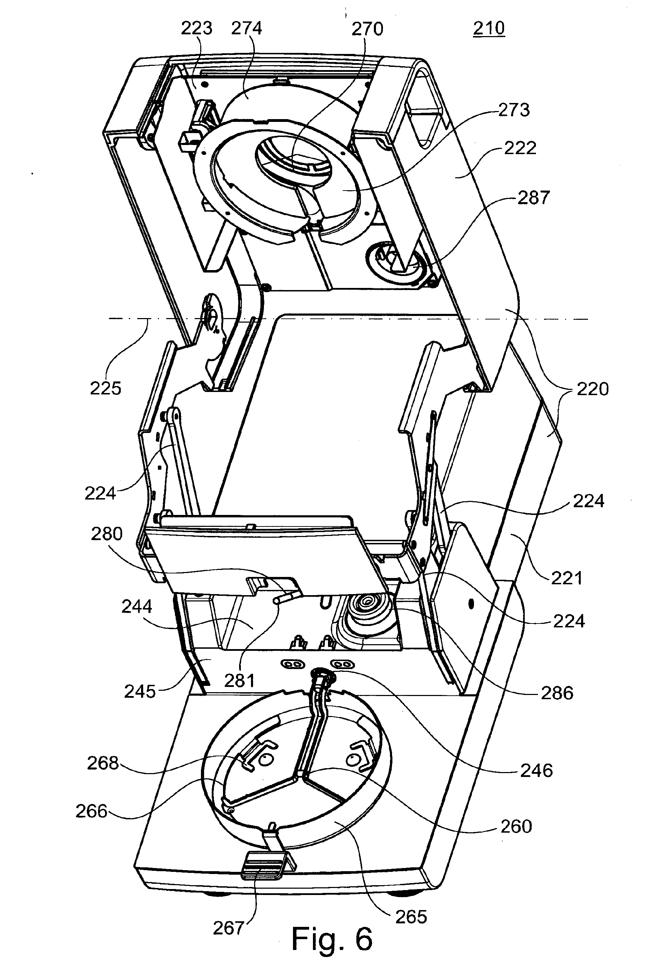

Um möglichst stabile Messergebnisse erhalten zu können, kann im Innern des Prüfraums ein Innenwindschutz angeordnet sein (siehe Figuren 6 - 8). Dieser Innenwindschutz ist um die Probenaufnahme 160 und das Mittel zur Erwärmung der Probe 170 angeordnet und bildet einen nahezu geschlossenen Raum. Der Innenwindschutz kann einen oberen Teil 174 und einen unteren Teil 165 aufweisen. Der obere Teil 174 ist am beweglichen Gehäuseteil 122 angeordnet. Durch den oberen Teil des Innenwindschutzes 174 wird ein zylinderförmiger Innenraum gebildet, der zur Probenaufnahme geöffnet ist. In diesem zylinderförmigen Innenraum ist das Mittel zur Erwärmung der Probe angeordnet. Der obere Innenwindschutz kann nur aus einer Zylinderfläche bestehen. Es ist jedoch vorteilhaft, wenn am oberen Ende eine in Messposition und Beschickungsposition horizontal ausgerichtete Fläche angeordnet ist. Diese Fläche ist bevorzugterweise oberhalb des Mittels zur Erwärmung der Probe 170 angeordnet. Die dem Mittel zur Erwärmung der Probe 170 zugewandte Seite, ist idealerweise hitzereflektierend. Dadurch wird ein Teil der erzeugten Wärme am Innenwindschutz reflektiert und wird zur Erwärmung der auf der Probenaufnahme 160 angeordneten Probe verwendet. Der untere Teil des Innenwindschutzes 165 ist am feststehenden Gehäuseteil 121 angeordnet. Durch den unteren Teil des Innenwindschutzes 165 wird ein zylinderförmiger Innenraum gebildet, der zum Mittel zur Erwärmung der Probe 170 hin offen ist. In diesem zylinderförmigen Innenraum ist die Probenaufnahme 160 angeordnet. Der Innenraum des oberen Innenwindschutzes 174 und der Innenraum des unteren Innenwindschutzes 165 bilden in Messposition einen Innenraum, in dem das Mittel zur Erwärmung der Probe 170 und die Probenaufnahme 160 angeordnet sind. Sowohl der obere als auch der untere Teil des Innenwindschutzes 165, 174 können aus einem Teil oder aus mehreren Teilen gefertigt sein.

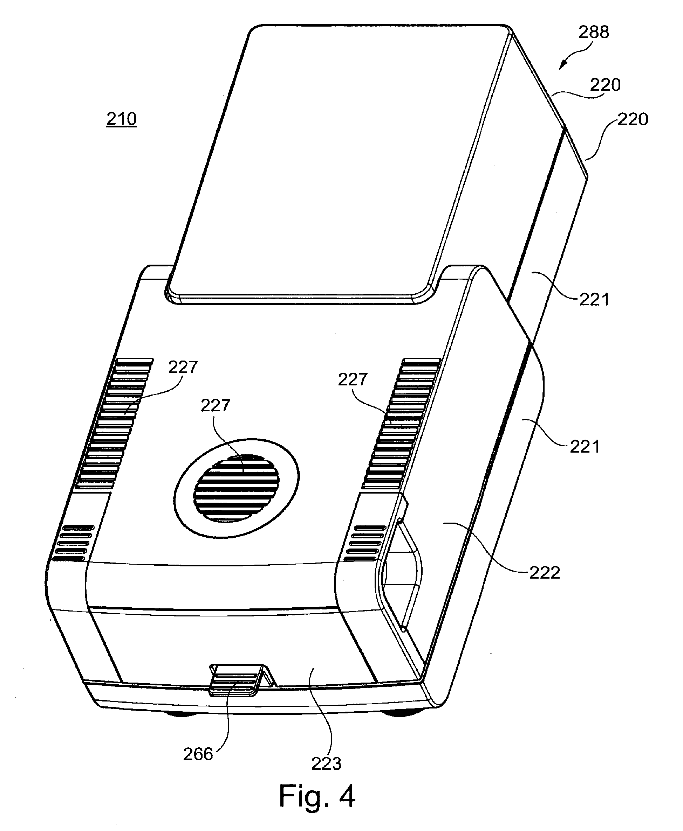

In den Figuren 4, 5, 6, 7 und 8 ist eine Ausführungsform des erfindungsgemässen Messgeräts 210 in verschiedenen Positionen dargestellt. Dieses Messgerät 210 weist sämtliche Bauteile auf, die bereits bei der Beschreibung der schematischen Ausführungsform aus Figur 1 und 2 beschrieben wurden.

In Figur 4 ist das erfindungsgemässe Messgerät 210 in Messposition dargestellt. Da das Gehäuse 220 in Messposition geschlossen ist, sind die meisten Bauteile nicht ersichtlich. Das Gehäuse 220 weist einen feststehenden Gehäuseteil 221 und einen beweglichen Gehäuseteil 222 auf. In Messposition wird vom feststehenden Gehäuseteil 221 und vom beweglichen Gehäuseteil 222 ein im Wesentlichen abgeschlossener Prüfraum gebildet. Der bewegliche Gehäuseteil 222 weist Abzugsöffnungen 227 auf, durch die Gase aus dem im Innern des Gehäuses 220 liegenden Prüfraum in die Umgebungsluft entweichen können. Vorteilhafterweise sind die Abzugsöffnungen 227 in Messposition auf der Oberseite des beweglichen Gehäuseteils 222 angeordnet. Besonders vorteilhaft ist eine Anordnung der Abzugsöffnungen 227 über dem, ebenfalls im Innern des Gehäuses 220 angeordneten, Mittel zur Erwärmung 170 der Probe.

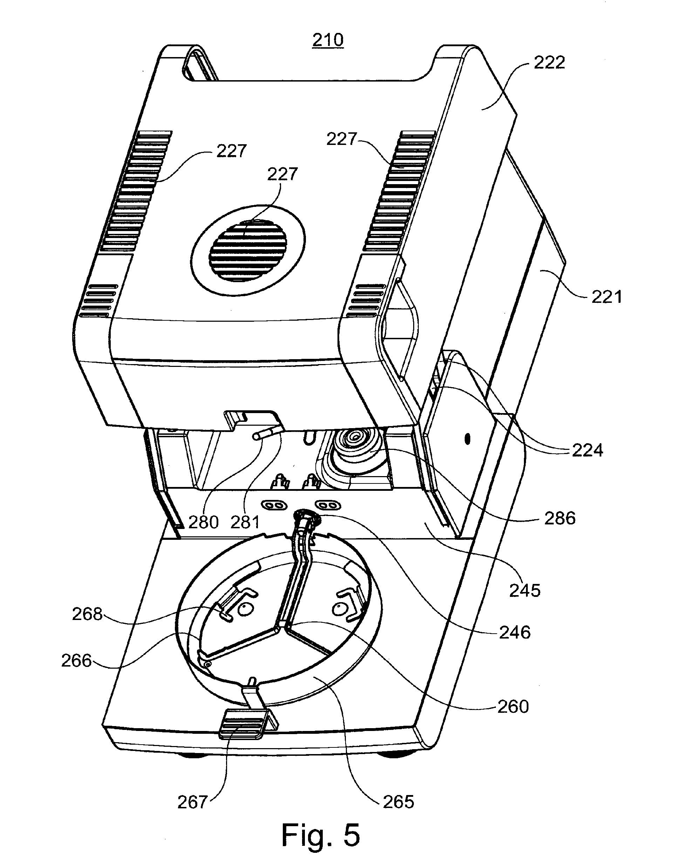

In Figur 5 ist das Messgerät 210 aus Figur 4 in Beschickungsposition dargestellt. Der bewegliche Gehäuseteil 222 wurde aus der Messposition durch eine translatorische Bewegung in die Beschickungsposition gebracht. Um diese translatorische Bewegung ausführen zu können, ist der bewegliche Gehäuseteil 222 durch eine Translationsführung 224 mit dem feststehenden Gehäuseteil 221 verbunden ist. Die Translationsführung 224 weist zwei im Wesentlichen parallel zueinander angeordnete Schenkel auf, durch deren Ausrichtung die Richtung der Translation des beweglichen Gehäuseteils 222 definiert ist.

Der feststehende Gehäuseteil 221 ist länglich ausgebildet. Die Wägevorrichtung ist vom feststehenden Gehäuseteil 221 weitgehend umschlossen. Einzig eine mit der Wägevorrichtung verbundene Probeaufnahme 260 ragt seitlich aus dem feststehenden Gehäuseteil 221 heraus. Auf dieser Probeaufnahme 260 lassen sich verschieden ausgestaltete Behältnisse wie Probeschalen, Tiegel und dergleichen mehr auflegen. Der feststehende Gehäuseteil 221 weist einen Bereich auf, der an der benutzerabgewandten Seite der Probenaufnahme 260 angeordnet ist. In diesem Bereich ist vorteilhafterweise die Wägevorrichtung angeordnet. In Beschickungsposition ist der bewegliche Gehäuseteil 222 oberhalb des feststehenden Gehäuseteils 221, idealerweise oberhalb des seitlich von der Probenaufnahme 260 angeordneten Bereichs, angeordnet.

Der bewegliche Temperatursensor 280 ist, auf einer beweglich gelagerten Lanze 281 angeordnet. Die Lanze 281 ist wie in der schematischen Darstellung der Figuren 3a und 3b beschrieben wurde, mittels eines Drehlagers am feststehenden Gehäuseteil befestigt. Die Achse des Drehlagers verläuft ebenfalls horizontal und die Lanze 281 ist auch mittels einer Federkraft in Messposition vorgespannt. In Messposition ist der Temperatursensor 280 zwischen dem Mittel zur Erwärmung der Probe 270 und der Probenaufnahme 260 angeordnet. In Beschickungsposition ist der Temperatursensor 280 und die Lanze 281 seitlich und oberhalb der Probenaufnahme 260 angeordnet. Auf diese Weise kann das Messgerät 210 mit einer Probe beschickt werden, ohne dass der Benutzer dabei durch den Temperatursensor 280 behindert wird.

Das Mittel zur Erwärmung der Probe 270 ist im beweglichen Gehäuseteil 222 angeordnet. Während der Messung wird das Mittel zur Erwärmung der Probe 270 heiss und erwärmt dadurch die unterhalb auf der Probenaufnahme 260 angeordnete Probe. Für die Erwärmung wird Elektrizität bzw. Strom benötigt. Dazu verfügt der feststehende Gehäuseteil 221 über einen Stromanschluss 288, der auf der Rückseite des Messgeräts 210 angeordnet ist. Der bewegliche Gehäuseteil 222 verfügt über keinen Stromanschluss. Der Strom muss deshalb vom feststehenden Gehäuseteil 221 zum beweglichen Gehäuseteil 222 transportiert werden. Dies geschieht Mittels eines elektrischen Kontaktmittels. Dieses elektrische Kontaktmittel weist einen ersten Teil 286 und einen zweiten Teil 287 auf. Der erste Teil 286 des elektrischen Kontaktmittels ist mit dem beweglichen Gehäuseteil 222 und der zweite Teil des elektrischen Kontaktmittels mit dem feststehenden Gehäuseteil 221 verbunden. Die beiden Teile des elektrischen Kontaktmittels 286, 287 sind dabei derart angeordnet, dass in Messposition ein elektrischer Kontakt vorhanden ist und das Mittel zur Erwärmung der Probe 270 mit Strom versorgt wird. In Beschickungsposition besteht kein Kontakt über das elektrische Kontaktmittel 286, 287. Der elektrische Kontakt wird automatisch durch die Bewegung des beweglichen Gehäuseteils 222 sichergestellt. Besonders vorteilhaft hat sich eine drehbare, konzentrische Steckverbindung, wie sie auch bei Wasserkochern verwendet wird, als elektrisches Kontaktmittel erwiesen. Die drehbare, konzentrische Steckverbindung ist besonders robust und stellt zuverlässig einen elektrischen Kontakt her. Es sind jedoch auch andere Ausführungsformen denkbar. Insbesondere Stecker-Buchsen-Verbindungen sind gut geeignet.

Durch diese Anordnung besteht in Messposition über den ersten und zweiten Teil des elektrischen Kontaktmittels 286, 287 eine elektrische Verbindung und in Beschickungsposition ist die elektrische Verbindung zwischen dem ersten und dem zweiten Teil des elektrischen Kontaktmittels 286, 287 unterbrochen. In der Beschickungsposition steht deshalb das Mittel zur Erwärmung nicht unter Strom und das Verletzungsrisiko ist reduziert. Der zweite Teil des elektrischen Kontaktmittels 286 wird in Figur 5 durch den beweglichen Gehäuseteil 222 verdeckt und ist deshalb nicht sichtbar.

Zur Reduktion von Luftwirbeln im Prüfraum kann im Innern des Prüfraums, um die Probenaufnahme 260, ein Innenwindschutz 265, 274 angeordnet sein. Dieser Innenwindschutz 265, 274 ist bevorzugterweise der äusseren Form der Probenschale und/oder der äusseren Form des Mittels zur Erwärmung der Probe 270 angepasst. Da üblicherweise runde Probenschalen verwendet werden, bietet sich die Verwendung eines Innenwindschutzes 265, 274 mit einer runden Aussenform an. Der Innenwindschutz kann einen oberen Teil 274 und einen unteren Teil 265 aufweisen. Der obere Teil 274 ist am beweglichen Gehäuseteil 222 angeordnet. Durch den oberen Teil des Innenwindschutzes 274 wird ein zylinderförmiger Innenraum umgrenzt, der zur Probenaufnahme geöffnet ist. In diesem zylinderförmigen Innenraum ist das Mittel zur Erwärmung der Probe 270 angeordnet. Der obere Innenwindschutz kann eine Zylinderfläche aufweisen. Es ist vorteilhaft, wenn die Zylinderfläche oberhalb der Probenaufnahme zumindest teilweise mittels Fläche, vorzugsweise einer Zylinderbasisfläche, begrenzt wird. Diese Fläche ist bevorzugterweise oberhalb des Mittel zur Erwärmung der Probe 270 angeordnet. Die dem Mittel zur Erwärmung der Probe 270 zugewandte Seite, ist idealerweise hitzereflektierend. Dadurch wird ein Teil der erzeugten Wärme am Innenwindschutz reflektiert und wird zur Erwärmung der auf der Probenaufnahme 160 angeordneten Probe verwendet. Die Fläche kann zudem Öffnungen aufweisen. Dadurch können Gase aus dem Prüfraum durch die beschriebenen Öffnungen und Abzugsöffnungen 227 im Gehäuse 220 in die Umgebungsluft entweichen. Es ist jedoch auch möglich, dass die Fläche keine Öffnungen aufweist.

Der untere Teil des Innenwindschutzes 265 ist am feststehenden Gehäuseteil 221 angeordnet. Durch den unteren Teil des Innenwindschutzes 265 wird ein zylinderförmiger Innenraum gebildet, der zum Mittel zur Erwärmung der Probe 270 offen ist. In diesem zylinderförmigen Innenraum ist die Probenaufnahme 260 angeordnet. Der Innenraum des oberen Innenwindschutzes 274 und der Innenraum des unteren Innenwindschutzes 265 bilden in Messposition einen Innenraum, in dem das Mittel zur Erwärmung der Probe 270 und die Probenaufnahme 260 angeordnet sind. Sowohl der obere als auch der untere Teil des Innenwindschutzes 265, 274 können aus einem Teil oder aus mehreren Teilen gefertigt sein.

Zum Einbringen einer Probeschale in den Prüfraum kann ein Probenschalenhalter 266 verwendet werden. Dieser Probenschalenhalter 266 weist einen Griff 267 und Auflageflächen 268 für die Probenschale auf. Während des Transports liegen die Ränder der Probenschale auf den Auflageflächen 268 auf. Während der Messung liegt die Probenschale nur auf der Probenaufnahme 260. Der Probenschalenhalter 266 berührt die Probenschale dabei nicht. Insbesondere wird das Gewicht des Probenschalenhalters 266 nicht von der Wägevorrichtung erfasst.

In Figur 6 ist das erfindungsgemässe Messgerät 210 aus Figur 4 bzw. Figur 5 in Wartungsposition dargestellt. Um in die Wartungsposition zu gelangen wurde ein Teil des beweglichen Gehäuseteils 222 um eine im Wesentlichen horizontal ausgerichtete Schwenkachse 225 von der Beschickungsposition in die Wartungsposition verschwenkt. Das Mittel zur Erwärmung der Probe 270 ist in dem schwenkbaren Teil des beweglichen Gehäuseteils 222 angeordnet und wird beim Einnehmen der Wartungsposition zusammen mit dem schwenkbaren Teil des beweglichen Gehäuseteils 222 verschwenkt. Dadurch sind die im beweglichen Gehäuseteil 222 angeordneten Teile für Wartungszwecke leicht zugänglich. Im oberen Gehäuseteil 222 ist das Mittel zur Erwärmung der Probe 270 angeordnet. Das Mittel zur Erwärmung der Probe 270 wird während des Messvorgangs durch ein Schutzglas 272 geschützt. Um das Mittel zur Erwärmung der Probe 270 ist der obere Teil des Innenwindschutzes 274 angeordnet.

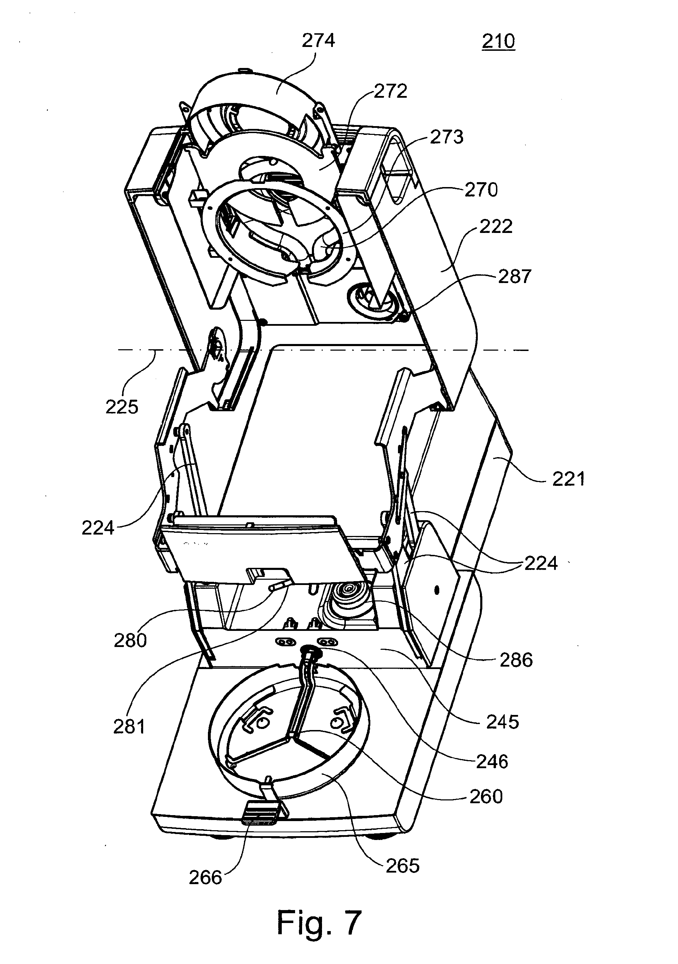

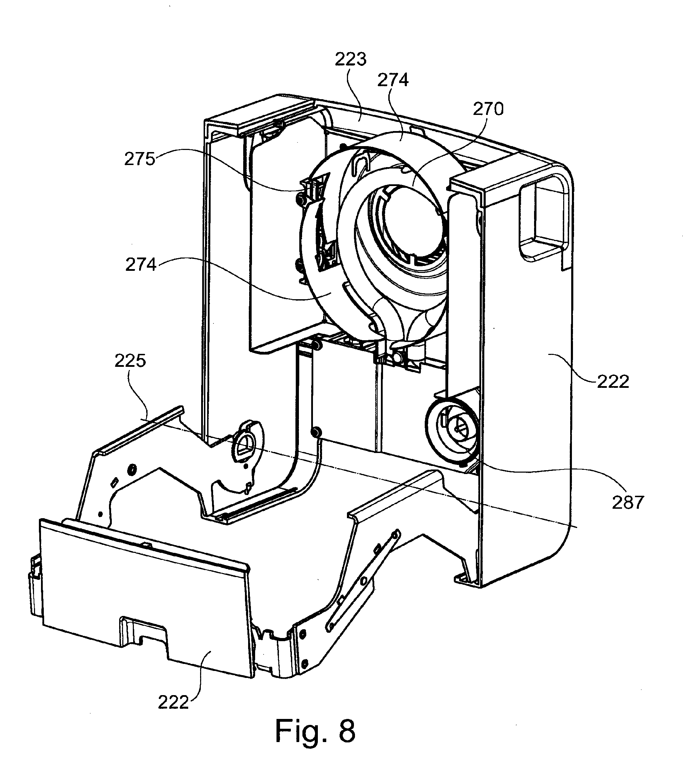

Um die Position und Ausgestaltung des Mittels zur Erwärmung der Probe 270, des Schutzglases 272 und des Innenwindschutzes 274 zu verdeutlichen ist in Figur 7 das Messgerät 220 mit teilweise entferntem oberen Teil des Innenwindschutzes 274 und in Figur 8 das bewegliche Gehäuseteil 222 ohne Schutzglas 272 dargestellt.

An der Zylinderbasisfläche des Innenwindschutzes 274 ist eine reflektierende Fläche angeordnet, die der Reflektion der Wärmestrahlung vom dem Mittels zur Erwärmung der Probe 270 zur Probenaufnahme 260 dient. Die Reflektion kann auch durch ein geeignetes, reflektierendes Materials der Zylinderbasisfläche oder einer reflektierenden Beschichtung der Zylinderbasisfläche erreicht werden. Eine im Wesentlichen kreisförmige Blende 273, dient der Konzentration der durch die vom Mittel zur Erwärmung der Probe 270 erzeugten Wärmestrahlen.

In Wartungsposition ist das Mittel zur Erwärmung der Probe 270 in vertikaler Richtung ausgerichtet. Zumindest ein Teil des oberen Innenwindschutzes 274 ist mittels einer Steckverbindung am beweglichen Gehäuseteil 222 befestigt, wobei die Steckverbindung in Wartungsposition im Wesentlichen vertikal ausgerichtet ist. Das Schutzglas 272 ist zwischen der Blende 273 und einem Teil des oberen Innenwindschutzes 274 eingeklemmt. Zum Entfernen des Schutzglases muss nur ein Teil des Innenwindschutzes 274 aus der Steckverbindung herausgezogen werden. Danach kann das Schutzglas einfach durch Herausziehen, ohne zu Hilfenahme von Werkzeugen entfernt werden. Das einfache Entfernen des Schutzglases 272 ist von besonderem Vorteil, da auf diese Weise das verschmutzungsanfällige Schutzglas 272 einfach entfernt und gereinigt werden kann.

Das Schutzglas 272 und/oder ein Teil des oberen Teils des Innenwindschutzes 274 kann mit Hilfe einer Führungsschiene 275 in einer kontrollierten Richtung aus dem beweglichen Gehäuseteil entfernt werden. Die Führungsschiene 275 ist in Wartungsposition im Wesentlichen vertikal ausgerichtet.

Das Entfernen des Schutzglases 272 wird zusätzlich durch eine Wartungsöffnung 223 vereinfacht. Die Wartungsöffnung 223 ist eine Öffnung im beweglichen Gehäuseteil 222, die nur in der Wartungsposition, jedoch nicht in der Messposition oder Beschickungsposition offen ist. Dadurch wird ein unbeabsichtigtes Berühren des Mittels zur Erwärmung der Probe verhindert. Das Verbrennungsrisiko kann reduziert werden. Die Wartungsöffnung wird mit Hilfe eines zweigeteilten beweglichen Gehäuseteils realisiert. Die beiden Teile des beweglichen Gehäuseteils sind dabei derart ausgestaltet, dass bei Einnahme der Wartungsposition ein Teil des beweglichen Gehäuseteils nicht verschwenkt wird. Dieser nicht-verschwenkte Teil gibt die Wartungsöffnung im verschwenkten Teil des beweglichen Gehäuseteils frei.

Die Breite der Wartungsöffnung 223 ist vorteilhafterweise gleich gross oder grösser als die Breite des Schutzglases 272. Auf diese Weise kann das Schutzglas einfach entfernt werden. Die Wartungsöffnung 223 ist orthogonal zur Steckrichtung des oberen Teils des Innenwindschutzes 274 bzw. in der Verlängerung der Führungsschiene 275 angeordnet. Durch diese Anordnung wird sicher gestellt, dass das Schutzglas 272 einfach aus der Wartungsöffnung 223 herausgezogen werden kann.

Der obere Teil des Innenwindschutzes 274 kann mehrteilig sein. Der der Wartungsöffnung 223 zugewandte Teil ist vorteilhafterweise werkzeuglos entfernbar. Dazu muss die Wartungsöffnung 223 breiter als der obere Teil des Innenwindschutzes 274 sein.

Das Mittel zur Erwärmung der Probe 270 kann auf verschiedene Weise am beweglichen Gehäuseteil 222 befestigt sein. Es ist beispielsweise möglich das Mittel zur Erwärmung 270 mittels einer Schraub- oder einer Steckverbindung am beweglichen Gehäuseteil 222 zu befestigen. Wird eine Steckverbindung verwendet, kann zu Wartungszwecken das Mittel zur Erwärmung 270 einfach herausgezogen werden. Idealerweise wäre diese Steckverbindung derart ausgestaltet, dass die Steckrichtung im Wesentlichen orthogonal zur Wartungsöffnung 223 ausgerichtet ist.

Das Mittel zur Erwärmung der Probe 270, die Blende 273, das Schutzglas 272 und der obere Teil des Innenwindschutzes 274 weissen Öffnungen auf, durch die aus einer Probe entweichenden Dämpfe und/oder flüchtigen Substanzen über diese Öffnungen und durch Abzugsöffnungen 227 in die Umgebungsluft abgeführt werden können. Die Öffnungen sind deshalb so angeordnet, dass ein direkter Abzug von aus der Probe entweichenden Gasen sicher gestellt ist. Vorteilhafterweise kann durch diese Öffnungen auf die auf der Probenaufnahme 260 angeordnete Probe geschaut werden, wodurch eine visuelle Kontrolle des Messvorgangs ermöglicht wird.

Anstelle des Innenwindschutzes 274 und der Blende 273 können andere geeignete Halterungen zur Positionierung des Schutzglases 272 verwendet werden.

Da das Schutzglas 272 einfach entfernbar ist, kann es durch den Benutzer oder Servicetechniker einfacher und schneller gereinigt werden. Idealerweise ist das Schutzglas 272 derart beschaffen, dass es in einer herkömmlichen Spülmaschine gereinigt werden kann, ohne dadurch beschädigt zu werden.

Die vorgestellten Ausführungsformen zeigen teilweise schematisch dargestellte Messgeräte zur gravimetrischen Feuchtigkeitsbestimmung mit unterschiedlichen Eigenschaften und Merkmalen. Die verschiedenen Eigenschaften und Merkmale wurden zur besseren Übersicht in verschiedenen Ausführungsbeispielen dargestellt, wobei es auch möglich ist, einzelne, mehrere oder alle aufgezeigten Merkmale und Eigenschaften in einem Messgerät zu realisieren.

### Bezugszeichenliste

- 210, 110, 10: Messgerät zur gravimetrischen Feuchtebestimmung
- 220, 120, 20: Gehäuse
- 221, 121, 21: Feststehender Gehäuseteil
- 222, 122, 22: Beweglicher Gehäuseteil
- 223: Wartungsöffnung
- 224, 24: Translationsführung
- 225: Schwenkachse
- 227, 27: Abzugsöffnungen
- 130, 30: Prüfraum
- 35: Steuer-/Regelvorrichtung
- 40: Wägevorrichtung
- 41: Feststehender Bereich der Wägezelle
- 42: Lastaufnahmebereich der Wägezelle
- 43: Wägezelle
- 245, 45: Trennwand
- 246, 46: Durchführung
- 47: Verbindungsglied
- 51: Übertragungsmittel zwischen der Steuer- und Regelvorrichtung und dem Temperatursensor
- 52: Übertragungsmittel zwischen dem Elektronikmodul und der Wägevorrichtung
- 53: Übertragungsmittel zwischen der Steuer- und Regelvorrichtung und dem Mittel zur Erwärmung der Probe
- 260, 160, 60: Probeaufnahme
- 61: Probeschale
- 62: Probe
- 265, 165: Unterer Teil des Innenwindschutzes
- 266: Probenschalenhalter
- 267: Griff des Probenschalenhalters
- 268: Auflagefläche der Probenschale während des Transports
- 270, 170, 70: Mittel zur Erwärmung der Probe, Strahlungsquelle
- 271: Strahlungsquelle
- 272: Schutzglas
- 273: Blende
- 274, 174: Oberer Teil des Innenwindschutzes
- 275: Führungsschiene
- 280, 180, 80: Temperatursensor
- 281, 181, 81: Lanze
- 282, 182, 82: Drehlagers
- 183, 83: Achse des Drehlagers
- 84: Federelement
- 286, 86: Erster Teil des elektrischen Kontaktmittels
- 287, 87: Zweiter Teil des elektrischen Kontaktmittels
- 288, 88: Netzanschluss, Stromanschluss
- 90: Elektronikmodul

## Patentansprüche

1. Messgerät (10, 210) zur gravimetrischen Feuchtigkeitsbestimmung mit einem Gehäuse (20, 220) und einer im Gehäuse (20, 220) angeordneten Wägevorrichtung (40), wobei die Wägevorrichtung (40) eine Lastaufnahme (60, 260), auf die eine Probe (62) auflegbar ist, aufweist und das Gehäuse (20, 220) einen feststehenden Gehäuseteil (21, 221) und einen beweglichen Gehäuseteil (22, 222) aufweist und der bewegliche Gehäuseteil (22, 222) eine Messposition und eine Beschickungsposition einnehmen kann, wobei in Beschickungsposition der feststehende Gehäuseteil (21, 221) und der bewegliche Gehäuseteil (22, 222) derart voneinander beabstandet sind, dass eine Probe auf die Lastaufnahme (60, 260) aufbringbar ist und der feststehende Gehäuseteil (21, 221) und der bewegliche Gehäuseteil (22, 222) in Messposition einen im Wesentlichen abgeschlossenen Prüfraum (30, 230) um die Lastaufnahme (60, 260) bilden und im Prüfraum (30, 230) ein Mittel zur Erwärmung (70, 270) einer auf der Lastaufnahme (60, 260) auflegbaren Probe (62) angeordnet ist, **dadurch gekennzeichnet, dass** ein elektrisches Kontaktmittel (86, 87, 286, 287) vorhanden ist, welches einen ersten Teil (86, 286) und einen zweiten Teil (87, 287) aufweist und der erste Teil (86, 286) des elektrischen Kontaktmittels mit dem feststehenden Gehäuseteil (21, 221) und der zweite Teil (87, 287) des elektrischen Kontaktmittels mit dem beweglichen Gehäuseteil (22, 222) verbunden ist, wobei in Messposition über den ersten und zweiten Teil (86, 286; 87, 287) des elektrischen Kontaktmittels eine elektrische Verbindung besteht und in Beschickungsposition die elektrische Verbindung zwischen dem ersten und dem zweiten Teil (86, 286; 87, 287) des elektrischen Kontaktmittels unterbrochen ist und nur der feststehende Gehäuseteil (21, 221) am Stromnetz (88, 288) anschliessbar ist und der bewegliche Gehäuseteil (22, 222) ausschliesslich über das elektrische Kontaktmittel mit Elektrizität versorgbar ist.

2. Messgerät (10, 210) nach Anspruch 1, **dadurch gekennzeichnet, dass** der erste Teil (86, 286) des elektrischen Kontaktmittels (86, 87, 286, 287) im Wesentlichen starr mit dem feststehenden Gehäuseteil (21, 221) und der zweite Teil (87, 287) des elektrischen Kontaktmittels im Wesentlichen starr mit dem beweglichen Gehäuseteil (22, 222) verbunden ist.

3. Messgerät (10, 210) zur gravimetrischen Feuchtigkeitsbestimmung, nach einem der vorangehenden Ansprüche **dadurch gekennzeichnet, dass** zwischen dem beweglichen Gehäuseteil (22, 222) und dem feststehenden Gehäuseteil (21, 221) mindestens ein zusätzliches elektronisches Kontaktmittel angeordnet ist, mittels dessen Steuersignale zwischen dem feststehenden Gehäuseteil (21, 221) in dem beweglichen Gehäuseteil (22, 222) transportierbar ist und über dieses zusätzliche elektronische Kontaktmittel in Messposition Steuersignale in das bewegliche Gehäuseteil (22, 222) transportierbar sind und in Beschickungsposition keine Steuersignale in das bewegliche Gehäuseteil (21, 221) transportierbar sind.

4. Messgerät (10, 210) zur gravimetrischen Feuchtigkeitsbestimmung, nach einem der vorangehenden Ansprüche **dadurch gekennzeichnet, dass** mittels eines Verschiebungsmittels (24, 224) der bewegliche Gehäuseteil (21, 221) von der Messposition in die Beschickungsposition durch eine Translation verschiebbar ist und durch diese Verschiebung der elektrische Kontakt zwischen dem erste und zweiten Teil (86, 286; 87, 287) des elektrischen Kontaktmittels unterbrechbar ist.

5. Messgerät (10, 210) zur gravimetrischen Feuchtigkeitsbestimmung, nach einem der vorangehenden Ansprüche **dadurch gekennzeichnet, dass** das elektrische Kontaktmittel eine Steckverbindung ist.

6. Messgerät (10, 210) zur gravimetrischen Feuchtigkeitsbestimmung, nach Anspruch 5 **dadurch gekennzeichnet, dass** die Steckverbindung einen Stecker und eine mit dem Stecker zusammenwirkende Wuchse aufweist und der Stecker in vertikaler Richtung aus der Buchse entfernbar ist.

7. Messgerät (10, 210) zur gravimetrischen Feuchtigkeitsbestimmung nach einem der vorangehenden Ansprüche, **dadurch gekennzeichnet, dass** ausschliesslich das Mittel zur Erwärmung der Probe (70, 270) mittels des elektrischen Kontaktmittels mit Elektrizität versorgbar ist.

8. Messgerät (10, 210) zur gravimetrischen Feuchtigkeitsbestimmung nach einem der vorangehenden Ansprüche, **dadurch gekennzeichnet, dass** der bewegliche Gehäuseteil (21, 221) gleichzeitig in horizontaler und vertikaler Richtung verschiebbar ist.

9. Messgerät (10, 210) zur gravimetrischen Feuchtigkeitsbestimmung nach einem der vorangehenden Ansprüche, **dadurch gekennzeichnet, dass** sowohl in Messposition als auch in Beschickungsposition der bewegliche Gehäuseteil (21, 210) oberhalb des feststehenden Gehäuseteils (22, 222) angeordnet ist.

10. Messgerät (10, 210) zur gravimetrischen Feuchtigkeitsbestimmung nach einem der vorangehenden Ansprüche, **dadurch gekennzeichnet, dass** das Mittel zur Erwärmung (70, 270) im feststehenden Gehäuseteil (22, 222) derart angeordnet ist, dass in Messposition das Mittel zur Erwärmung der Probe (70, 270) über der Probenaufnahme (60, 260) und in Beschickungsposition das Mittel zur Erwärmung der Probe (70, 270) über dem beweglichen Gehäuseteil (22, 222) angeordnet ist.

11. Messgerät (10, 210) zur gravimetrischen Feuchtigkeitsbestimmung nach einem der vorangehenden Ansprüche, **dadurch gekennzeichnet, dass** das Mittel zur Erwärmung (70, 270) in Messposition und/oder Beschickungsposition in einer flächigen Ausdehnung im Wesentlichen horizontal über der Probenaufnahme (60, 260) und zwischen dem feststehenden Gehäuseteil (21, 221) und dem beweglichen Gehäuseteil (22, 222) angeordnet ist.

12. Messgerät (10, 210) zur gravimetrischen Feuchtigkeitsbestimmung nach einem der vorangehenden Ansprüche, **dadurch gekennzeichnet, dass** mindestens ein Teil des beweglichen Gehäuseteils (22, 222) um eine im Wesentlichen horizontal ausgerichtete Schwenkachse (25, 225) von der Beschickungsposition in eine Wartungsposition schwenkbar ist, wobei an dem schwenkbaren Teil des beweglichen Gehäuseteils (21, 221) das Mittel zur Erwärmung (70, 270) angeordnet ist und dieses Mittel zur Erwärmung (70, 270) in der Wartungsposition zu Wartungszwecken zugänglich ist und das Mittel zur Erwärmung (70, 270) in der Wartungsposition im Wesentlichen vertikal ausgerichtet ist.

13. Messgerät (10, 210) zur gravimetrischen Feuchtigkeitsbestimmung nach einem der vorangehenden Ansprüche, **dadurch gekennzeichnet, dass** in Beschickungsposition und Wartungsposition am beweglichen Gehäuseteil (22, 222) keine Spannung anliegt.

14. Messgerät (10, 210) zur gravimetrischen Feuchtigkeitsbestimmung, nach einem der vorangehenden Ansprüche **dadurch gekennzeichnet, dass** die Wägevorrichtung (40) im feststehenden Gehäuseteil (22, 222) angeordnet ist.

## Claims

1. Measuring instrument (10, 210) for the gravimetric determination of moisture content with a housing (20, 220) and a weighing device (40) arranged inside the housing (20, 220), wherein the weighing device (40) comprises a load receiver (60, 260) onto which a sample (62) can be placed, wherein further the housing (20, 220) comprises a stationary housing part (21, 221) and a movable housing part (22, 222), wherein the movable housing part (22, 222) can alternately occupy a measuring position and a loading position, wherein in said loading position the stationary housing part (21, 221) and the movable housing part (22, 222) are spaced apart from each other in such a way that a sample (62) can be put on the load receiver (60, 260), wherein in said measuring position, the stationary housing part (21, 221) and the movable housing part (22, 222) form an essentially enclosed testing compartment (30, 230) surrounding the load receiver (60, 260), and wherein a sample-heating means (70, 270) is arranged in the testing compartment (30, 230) to perform the function of heating a sample (62) that is placed on the load receiver (60, 260), **characterized in that** the measuring instrument (10, 210) comprises an electrical contact means (85, 285) having a first part (86, 286) and a second part (87, 287) and that the first part (86, 286) of the electrical contact means (85, 285) is connected to the stationary housing part (21, 221) and the second part (87, 287) of the electrical contact means (85, 285) is connected to the movable housing part (22, 222), wherein in the measuring position an electrical connection exists by way of the first part (86, 286) and the second part (87, 287) of the electrical contact means (85, 285), and wherein in the loading position the electrical connection between the first part (86, 286) and the second part (87, 287) of the electrical contact means (85, 285) is interrupted; and further that only the stationary housing part (21, 221) is connected to the power grid by means of a power connection (88, 288), and that the movable housing part (22, 222) can be supplied with electricity only by way of the electrical contact means (85, 285).

2. Measuring instrument (10, 210) to claim 1, **characterized in that** the first part (86, 286) of the electrical contact means (85, 285) has an essentially rigid connection to the stationary housing part (21, 221), and the second part (87, 287) of the electrical contact means (85, 285) has an essentially rigid connection to the movable housing part (22, 222).

3. Measuring instrument (10, 210) for the gravimetric determination of moisture content according to one of the preceding claims, **characterized in that** between the movable housing part (22, 222) and the stationary housing part (21, 221) there is in addition at least one electronic contact means arranged, through which control signals can be transferred between the stationary housing part (21, 221) and the movable housing part (22, 222), that in the measuring position said electronic contact means is operable to carry control signals into the movable housing part (22, 222), and that in the loading position no control signals can be carried into the movable housing part (22, 222).

4. Measuring instrument (10, 210) for the gravimetric determination of moisture content according to one of the preceding claims, **characterized in that** the movable housing part (22, 222) can be brought in a translatory movement from the measuring position to the loading position with the help of a displacement-guiding means (24, 224), and that as a result said translatory movement, the electrical contact between the first part (86, 286) and the second part (87, 287) of the electrical contact means (85, 285) can be interrupted.

5. Measuring instrument (10, 210) for the gravimetric determination of moisture content according to one of the preceding claims, **characterized in that** the electrical contact means (85, 285) comprises a plug-in connection.

6. Measuring instrument (10, 210) for the gravimetric determination of moisture content according to claim 5, **characterized in that** the plug-in connection comprises a plug and a socket cooperating with said plug, and that the plug can be extracted in vertical direction from the socket.

7. Measuring instrument (10, 210) for the gravimetric determination of moisture content according to one of the preceding claims, **characterized in that** only the sample heating means (70, 270) is designed to be supplied with electricity through the electrical contact means (85, 285).

8. Measuring instrument (10, 210) for the gravimetric determination of moisture content according to one of the preceding claims, **characterized in that** the movable housing part (22, 222) is designed to move simultaneously in horizontal and in vertical direction.

9. Measuring instrument (10, 210) for the gravimetric determination of moisture content according to one of the preceding claims, **characterized in that** the movable housing part (22, 222) is located above the stationary housing part (21, 221) in both the measurement position and the loading position of the apparatus.

10. Measuring instrument (10, 210) for the gravimetric determination of moisture content according to one of the preceding claims, **characterized in that** the sample-heating means (70, 270) in the movable housing part (22, 222) is arranged so that in the measuring position, the sample-heating means (70, 270) is located above the sample receiver (60, 260), and in the loading position the sample-heating means (70, 270) is located above the stationary housing part (21, 221).

11. Measuring instrument (10, 210) for the gravimetric determination of moisture content according to one of the preceding claims, **characterized in that** in the measuring position and/or in the loading position the sample-heating means (70, 270) is arranged so that its surface spreads in essence horizontally over the sample receiver (60, 260) and between the stationary housing part (21, 221) and the movable housing part (22, 222).

12. Measuring instrument (10, 210) for the gravimetric determination of moisture content according to one of the preceding claims, **characterized in that** at least a portion of the movable housing part (22, 222) can be swiveled about an essentially horizontal pivot axis (25, 225) from the loading position into a servicing position, wherein the swivel-pivoted portion of the movable housing part (22, 222) contains the heating means (70, 270), and wherein in the servicing position said heating means (70, 270) is accessible for servicing and is oriented in an essentially vertical position.

13. Measuring instrument (10, 210) for the gravimetric determination of moisture content according to one of the preceding claims, **characterized in that** in the loading position and in the servicing position the movable housing part (22, 222) does not carry a voltage.

14. Measuring instrument (10, 210) for the gravimetric determination of moisture content according to one of the preceding claims, **characterized in that** the weighing device (40) is arranged in the stationary housing part (21, 221).

## Revendications

1. Appareil de mesure (10, 210) pour la détermination gravimétrique de l'humidité, avec un boîtier (20, 220) et un dispositif de pesage (40) agencé dans le boîtier (20, 220), dans lequel le dispositif de pesage (40) comporte un récepteur de charge (60, 260) sur lequel peut être déposé un échantillon (62), et le boîtier (20, 220) comporte une partie de boîtier immobile (21, 221) et une partie de boîtier mobile (22, 222), et la partie de boîtier mobile (22, 222) peut prendre une position de mesure et une position de chargement, dans lequel, la position de chargement, la partie de boîtier immobile (21, 221) et la partie de boîtier mobile (22, 222) sont écartées l'une de l'autre de manière à ce qu'un échantillon puisse être déposé sur le récepteur de charge (60, 260), et la partie de boîtier immobile (21, 221) et la partie de boîtier mobile (22, 222) forment une chambre d'essai (30, 230) essentiellement fermée autour du récepteur de charge (60, 260) dans la position de mesure, et un moyen de chauffage (70, 270) d'un échantillon (62) destiné à être déposé sur le récepteur de charge (60, 260) est agencé dans la chambre d'essai (30, 230), **caractérisé en ce qu'**il est prévu un moyen de contact électrique (86, 87, 286, 287) comportant une première partie (86, 286) et une deuxième partie (87, 287), et la première partie (86, 286) du moyen de contact électrique est reliée à la partie de boîtier immobile (21, 221) et la deuxième partie (87, 287) du moyen de contact électrique est reliée à la partie de boîtier mobile (22, 222), dans lequel, dans la position de mesure, une liaison électrique est établie par les premières et deuxième parties (86, 286 ; 87, 287) du moyen de contact électrique, et la liaison électrique entre la première et la deuxième parties (86, 286 ; 87, 287) du moyen de contact électrique est interrompue dans la position de chargement, et seule la partie de boîtier immobile (21, 221) peut être raccordée au réseau électrique (88, 288), et la partie de boîtier mobile (22, 222) ne peut être alimenté en électricité que par le biais du moyen de contact électrique.

2. Appareil de mesure (10, 210) selon la revendication 1, **caractérisé en ce que** la première partie (86, 286) du moyen de contact électrique (86, 87, 286, 287) est reliée essentiellement fixement à la partie de boîtier immobile (21, 221), et la deuxième partie (87, 287) du moyen de contact électrique est reliée essentiellement fixement à la partie de boîtier mobile (22, 222).

3. Appareil de mesure (10, 210) pour la détermination gravimétrique de l'humidité selon l'une des revendications précédentes, **caractérisé en ce qu'**au moins un moyen de contact électronique supplémentaire agencé entre la partie de boîtier mobile (22, 222) et la partie de boîtier immobile (21, 221) permet de transporter des signaux de commande entre la partie de boîtier immobile (21, 221) et la partie de boîtier mobile (22, 222), et des signaux de commande peuvent être transportés vers la partie de boîtier mobile (22, 222) dans la position de mesure par le biais de ce moyen de contact électronique supplémentaire, et aucun signal de commande ne peut être transporté vers la partie de boîtier mobile (21, 221) dans la position de chargement.

4. Appareil de mesure (10, 210) pour la détermination gravimétrique de l'humidité selon l'une des revendications précédentes, **caractérisé en ce que** la partie de boîtier mobile (21, 221) peut être déplacée par translation de la position de mesure vers la position de chargement à l'aide d'un moyen de déplacement (24, 224), et le contact électrique entre la première et la deuxième parties (86, 286 ; 87, 287) du moyen de contact électrique peut être interrompu par ce déplacement.

5. Appareil de mesure (10, 210) pour la détermination gravimétrique de l'humidité selon l'une des revendications précédentes, **caractérisé en ce que** le moyen de contact électrique est une connexion par enfichage.

6. Appareil de mesure (10, 210) pour la détermination gravimétrique de l'humidité selon la revendication 5, **caractérisé en ce que** la connexion par enfichage comporte un connecteur et une prise coopérant avec le connecteur, et le connecteur peut être retiré de la prise dans la direction verticale.

7. Appareil de mesure (10, 210) pour la détermination gravimétrique de l'humidité selon l'une des revendications précédentes, **caractérisé en ce que** seul le moyen de chauffage de l'échantillon (70, 270) peut être alimenté en électricité par le moyen de contact électrique.

8. Appareil de mesure (10, 210) pour la détermination gravimétrique de l'humidité selon l'une des revendications précédentes, **caractérisé en ce que** la partie de boîtier mobile (21, 221) peut être déplacée simultanément dans la direction horizontale et verticale.

9. Appareil de mesure (10, 210) pour la détermination gravimétrique de l'humidité selon l'une des revendications précédentes, **caractérisé en ce que** la partie de boîtier mobile (21, 221) est agencée au-dessus de la partie de boîtier immobile (22, 222), aussi bien dans la position de mesure que dans la position de chargement.

10. Appareil de mesure (10, 210) pour la détermination gravimétrique de l'humidité selon l'une des revendications précédentes, **caractérisé en ce que** le moyen de chauffage (70, 270) est agencé dans la partie de boîtier immobile (22, 222) de manière à ce que dans la position de mesure, le moyen de chauffage de l'échantillon (70, 270) soit agencé au-dessus du récepteur de charge (60, 260) et à ce que dans la position de chargement, le moyen de chauffage de l'échantillon (70, 270) soit agencé au-dessus de la partie de boîtier mobile (22, 222).

11. Appareil de mesure (10, 210) pour la détermination gravimétrique de l'humidité selon l'une des revendications précédentes, **caractérisé en ce que** dans la position de mesure et/ou dans la position de chargement, le moyen de chauffage (70, 270) est agencé dans une extension planaire, essentiellement horizontalement au-dessus du récepteur de charge (60, 260) et entre la partie de boîtier immobile (21, 221) et la partie de boîtier mobile (22, 222).

12. Appareil de mesure (10, 210) pour la détermination gravimétrique de l'humidité selon l'une des revendications précédentes, **caractérisé en ce qu'**au moins une partie de la partie de boîtier mobile (22, 222) peut pivoter autour d'un axe de pivotement (25, 225) orienté essentiellement horizontalement, de la position de chargement vers une position d'entretien, le moyen de chauffage (70, 270) étant agencé sur la partie pivotante de la partie de boîtier mobile (21, 221), et ce moyen de chauffage (70, 270) étant accessible pour l'entretien dans la position d'entretien, et le moyen de chauffage (70, 270) étant orienté essentiellement verticalement dans la position d'entretien.

13. Appareil de mesure (10, 210) pour la détermination gravimétrique de l'humidité selon l'une des revendications précédentes, **caractérisé en ce que** la partie de boîtier mobile (22, 222) n'est pas mise sous tension ni dans la position de chargement, ni dans la position d'entretien.

14. Appareil de mesure (10, 210) pour la détermination gravimétrique de l'humidité selon l'une des revendications précédentes, **caractérisé en ce que** le dispositif de pesage (40) est agencé dans la partie de boîtier immobile (22, 222).
